# EUROPÄISCHE PATENTSCHRIFT

(11) **EP 1 257 748 B1**
(45) Veröffentlichungstag und Bekanntmachung des Hinweises auf die Patenterteilung: **30.08.2006**
(21) Anmeldenummer: 01967265.8
(22) Anmeldetag: 14.08.2001
(51) Int. Cl.: F16D 65/56, F16D 65/18, F16D 55/228

(54) **FESTSATTEL-SCHEIBENBREMSE**
DISC BRAKE
FREIN A DISQUE

(30) Priorität: 17.08.2000 DE 10040175; 26.04.2001 DE 10120328
(43) Veröffentlichungstag der Anmeldung: 20.11.2002
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE); BIEKER, Dieter, 83080 Oberaudorf (DE); PAHLE, Wolfgang, 74080 Heilbronn (DE)
(74) Vertreter: Mattusch, Gundula
(86) Internationale Anmeldenummer: PCT/EP2001/009365
(87) Internationale Veröffentlichungsnummer: WO 2002/014707

(56) Entgegenhaltungen:
- DE-A- 3 332 548
- FR-A- 1 547 063
- US-A- 3 059 731
- US-A- 5 590 744

## Beschreibung

Die Erfindung betrifft eine pneumatisch und/oder elektromechanisch betätigte Scheibenbremse für Nutzfahrzeuge nach dem Oberbegriff des Anspruchs 1.

Scheibenbremsen lassen sich nach dem gewählten Prinzip der Krafteinleitung in zwei Grundbauarten einteilen:
1. Krafterzeugung und Verschleißnachstellung beiderseits der Bremsscheibe: z.B. hydraulische Festsattelscheibenbremse mit axial fixierter Bremsscheibe und Krafterzeugung beidseits der Bremsscheibe, sowie
2. Krafterzeugung und Verschleißnachstellung auf einer Seite der Bremsscheibe und Übertragung der Betätigungskraft auf die abgewandte Seite nach dem Reaktionskraftprinzip: z.B. Schiebesattelscheibenbremse, Schwenksattelscheibenbremse, Festsattelscheibenbremse mit verschiebbarer Bremsscheibe.

Druckluftbetätigte Scheibenbremsen für schwere Nutzfahrzeuge mit Felgendurchmessem von 15Zoll und mehr nutzen das Reaktionskraftprinzip, da aufgrund der beengten Einbauverhältnisse am Fahrzeugrad die Anordnung eines Druckluft- Betätigungszylinders nur auf der zur Fahrzeuginnenseite offenen Seite des Fahrzeugrades möglich ist. Derartige Konstruktionen zeigen z.B. die DE 36 10 569 A1, die DE 37 16 202 A1, die gattungsbildende EP 0 531 321 A1 (siehe hier insbesondere die Konstruktion der Nachsteller nach Art von Drehantrieben) und die EP 0688 404 A1.

Schiebesattel oder Schwenksattel-Scheibenbremsen benötigen ein achsfestes Bauteil - i.allg. Bremsträger genannt - welches die Bremsschuhe/Bremsbeläge hält bzw. führt und bei Bremsbetätigung deren Umfangskräfte aufnimmt sowie den koaxial zur Fahrzeugachse verschiebbar gelagerten Bremssattel trägt.

Die Relativbewegung, welche der Bremssattel gegen das achsfeste Bauteil ausführt, läßt sich in den Arbeitshub und den Verschleißhub unterteilen.

Der Arbeitshub wird bei jeder Bremsbetätigung ausgeführt, um das Lüftspiel der Bremse zu überwinden und die bei der Kraftaufbringung entstehenden Elastizitäten von Bremsbelägen und Bremssattel auszugleichen. Er beträgt - je nach Höhe der Betätigungskraft und der Größe des Lüftspiels - üblicherweise weniger als 4 mm.

Der Verschleißhub ist dagegen der Verschleißnachstellweg, den der Sattel über eine große Anzahl von Bremsbetätigungen ausführt, um den Verschleiß an der Reaktionsseite der Bremse auszugleichen. Der Verschleißhub setzt sich aus dem Verschleiß des außen liegenden Bremsbelages und der außen liegenden Bremsscheibenreibfläche zusammen und beträgt üblicherweise bis zu 25mm.

Bei der Bremsenbauart mit einem Festsattel und einer verschiebbaren Bremsscheibe werden dagegen Arbeitshub und Verschleißhub durch Verschieben der Bremsscheibe erzeugt.

Die Bauarten mit Schiebe - oder Schwenksattel haben den Nachteil, daß der achsfeste Bremsträger zur Umfangskraftaufnahme der Bremsbacken und Halterung und Führung des Bremssattels benötigt wird. Durch dieses Bauteil entstehen zusätzliche Kosten und zusätzliches Gewicht. Zudem ist das benötigte Schiebeführungs- bzw. Schwenksystem störungsanfällig.

Bei der Bauart mit verschiebbarer Bremsscheibe besteht dagegen das Problem, die Bremsscheibe auf dem Führungsbereich der Nabe über die ganze Lebensdauer leicht schiebbar zu halten. Eine wirkungsvolle Abdichtung ist aufgrund der beengten Einbauverhältnisse und der harten Umgebungsbeanspruchung kaum realisierbar.

Die Erfindung hat vor diesem Hintergrund die Aufgabe, eine pneumatisch oder elektromechanisch betätigte Scheibenbremse zu schaffen, welche die Nachteile beweglicher Bremssattelkonzepte vermeidet.

Diese Aufgabe löst die Erfindung durch den Gegenstand des Anspruches 1.

Dabei sind die Zuspanneinrichtungen auf den beiden Seiten der Bremsscheibe über eine Kopplungseinrichtung derart miteinander gekoppelt, daß sie ausschließlich synchron bewegbar sind. Auf diese Weise ist nur eine Antriebseinheit, z.B. ein Bremszylinder oder ein Elektromotor, pro Scheibenbremse erforderlich.

Besonders kostengünstig ist die Kopplungseinrichtung als Kopplungsstange ausgelegt werden, welche Drehhebel beidseits der Bremsscheibe miteinander koppelt.

Die Erfindung nutzt die Vorteile des bei hydraulischen Bremsen an sich bekannten Festsattelprinzips (aus dem Bereich hydraulisch betätigter Scheibenbremsen sind solche mit Krafterzeugungseinrichtungen auf beiden Seiten der Bremsscheibe bekannt (FR-A- 1 547 063 oder US-A-5 590 744) - wie kompakte Bauweise und Ausführung des Verschleißhubes - und überträgt sie auf pneumatisch oder elektromechanisch betätigte Scheibenbremsen.

Zweckmäßig greift die Kopplungsstange in Ausnehmungen an den von den Druckstücken abgewandten Enden der Drehhebel ein.

Nachfolgend werden Ausführungsbeispiele der Erfindung unter Bezug auf die Zeichnung näher erläutert. Es zeigt:
- Fig. 1: eine schnittartige Prinzipskizze einer Scheibenbremse;
- Fig. 2: eine Schnittdarstellung durch eine Scheibenbremse mit jeweils einer Zuspanneinrichtung auf jeder Seite der Bremsscheibe im zugespannten Zustand;
- Fig. 3: eine Schnittdarstellung durch die Scheibenbremse der Fig. 2 im gelösten Zustand.

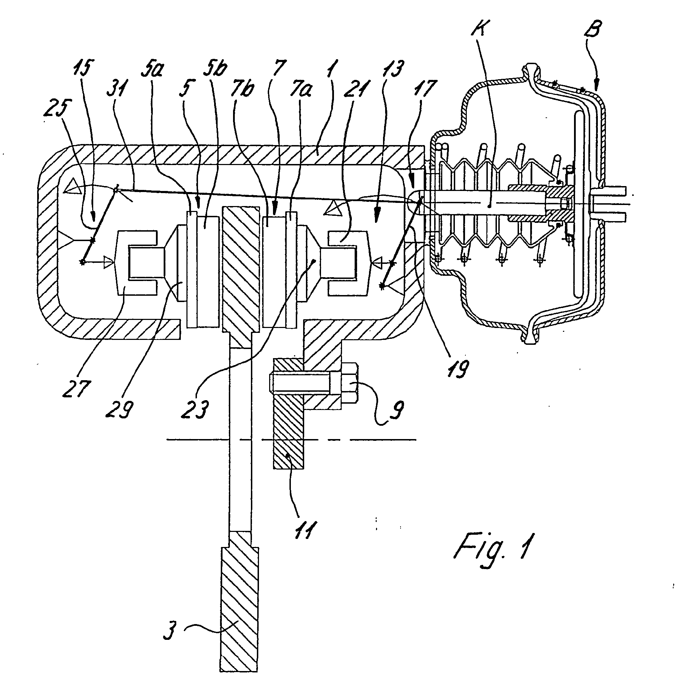

Fig. 1 zeigt eine Scheibenbremse, die einen Bremssattel 1 aufweist, welcher eine Bremsscheibe 3 in ihrem oberen Umfangsbereich umfaßt. Beidseits der Bremsscheibe 3 sind in Richtung der Bremsscheibe und von dieser weg - d.h., senkrecht zur Ebene der Bremsscheibe 3 - verschiebliche Bremsbeläge 5, 7 angeordnet, die in üblicher Weise aus einem Bremsbelagträger 5a, 7a und dem darauf aufgebrachten Belagmaterial 5b, 7b bestehen.

Der Bremssattel 1 ist an einer Seite der Bremsscheibe (in Fig. 1 rechts) in seinem unteren Abschnitt, welcher sich im wesentlichen senkrecht zur Bremsscheibe zu dieser hin nach innen erstreckt, mit wenigstens einem oder mehreren Bolzen 9 entweder direkt an einem Achsflansch oder Ansatz 11 der Fahrzeugachse (ansonsten hier nicht abgebildet) oder über einen Zwischenflansch (hier nicht abgebildet) am Achsflansch oder einem Ansatz 11 befestigbar.

Der Bremssattel 1 ist relativ zum Achsflansch 11 unverschiebbar, es handelt sich damit um einen sogenannten Festsattel. Da der Bremssattel 1 relativ zum Achsflansch 11 unverschiebbar ist, benötigt er beidseits er Bremsscheibe Zuspanneinrichtungen 13, 15 zum Zuspannen (und Lösen) der Bremsbeläge 5, 7 in Richtung der Bremsscheibe 3.

An seiner in Fig. 1a rechten oberen Seite weist der Bremssattel eine Öffnung 17 für eine Kolbenstange K eines Bremszylinders B (vorzugsweise pneumatisch) oder einer elektromechanischen Antriebseinrichtung auf.

Die Kolbenstange wirkt auf einen - vorzugsweise exzentrisch - am Bremssattel 3 gelagerten Drehhebel 19, welcher dazu ausgelegt ist, (direkt über entsprechende Ansätze oder aber ggf. über weitere, hier nicht dargestellte, sich aber beispielhaft aus den weiteren Fig. ergebende Bauelemente) mittels wenigstens einer Nachstell-Dreheinrichtung einer Nachstellhülse 21, in welcher ein Druckstück 23 verschraubbar angeordnet ist, den einen - hier den rechten - Bremsbelag 7 in Richtung der Bremsscheibe 3 vorzuschieben.

Zum Rückstellen des Bremsbelages kann eine Rückstellfeder dienen (in Fig. 1 nicht dargestellt).

Da sowohl die Bremsscheibe 3 als auch der Bremssattel 1 relativ zur Fahrzeugachse fix bzw. nicht beweglich angeordnet sind, ist auf der der ersten Zuspanneinrichtung 13 gegenüberliegenden Seite der Bremsscheibe 3 die weitere Zuspanneinrichtung 15 vorgesehen.

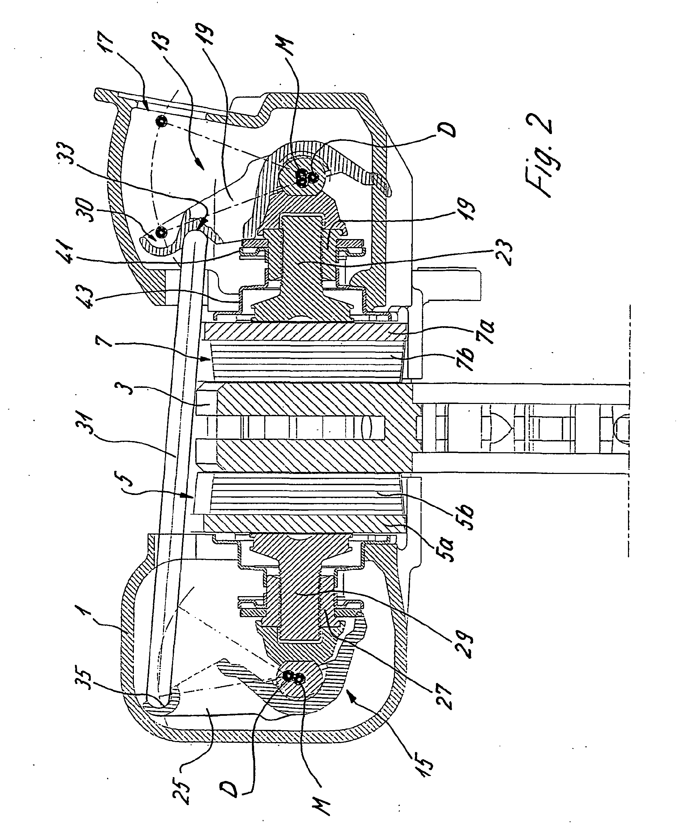

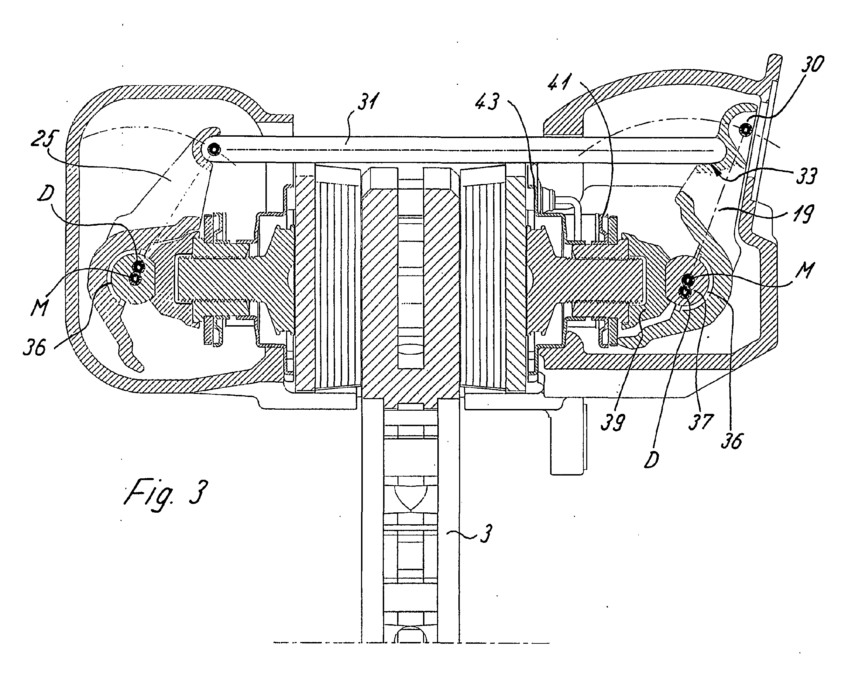

Diese in Fig. 1 auf der linken Seite der Bremsscheibe 3 vorgesehene Zuspanneinrichtung 15 ist analog zur Zuspanneinrichtung 13 ausgebildet, d.h. sie weist wiederum einen Drehhebel 25 auf, der vorzugsweise exzentrisch an der Innenseite des Bremssattels 1 gelagert ist, und der dazu ausgelegt ist, (direkt über entsprechende Ansätze oder aber ggf. über weitere, hier nicht dargestellte, sich aber beispielhaft aus den weiteren Fig. ergebende Bauelemente) mittels wenigstens einer Nachstellhülse 27, in welcher ein Druckstück 29 verschraubbar angeordnet ist, den zweiten - hier den linken - Bremsbelag 5 in Richtung der Bremsscheibe 3 vorzuschieben. Dabei ist - wie in Fig. 2 und 3 zu erkennen - die Exzentrizität der zweiten Zuspanneinrichtung bzw. die des Drehhebels 25 der zweiten Zuspanneinrichtung 15 - hier also die Exzentrizität des auf der linken Seite der Bremsscheibe 3 angeordneten Drehhebels 25 - entgegengesetzt zur Exzentrizität des Drehhebels 19 der ersten Zuspanneinheit 13 auf der gegenüberliegenden Seite der Bremsscheibe 3 ausgebildet, d.h., die Drehachse D des Drehhebels 25 liegt hier nach unten zur Achse M und die Drehachse D des Drehhebels 19 liegt hier nach oben zur Achse M versetzt.

Die beiden Drehhebel sind über eine Koppelmechanik, die hier als gelenkig an den oberen Enden der Drehhebel 19, 25 angelenkter, diese miteinander verbindender Kopplungsbolzen 31 ausgebildet ist, direkt miteinander verbunden. Die beiden Drehhebel 19, 25 bewegen sich daher synchron zueinander.

Nach Fig. 1 werden somit beidseits der Bremsscheibe 3 jeweils separate Zuspanneinrichtungen 13, 15 vorgesehen, die über eine Koppelmechanik gemeinsam betätigbar sind.

Das Nachstellsystem der Bremse nach Fig. 1 weist ferner beidseits der Scheibenbremse angeordnete Nachstelleinrichtungen auf. Diese umfassen u.a. die miteinander verschraubten und damit auch relativ zueinander axial verstellbaren Nachstellhülsen 21, 27 und Druckstücke 23, 29 sowie vorzugsweise separate Nachstellerantriebe (hier nicht dargestellt, z.B. elektromotorisch oder in mechanischer Kopplung mit der Drehhebeln.) beidseits der Bremsscheibe 3. Alternativ zu drehenden Nachstelleinrichtungen sind auch lageveränderbare Kolben oder andere lageveränderbare Einrichtungen realisierbar. Auf jeder Seite der Bremsscheibe kann wiederum nur jeweils eine Nachstellhülse mit einem Druckstück vorgesehen sein oder aber zwei oder mehr, insbesondere gekoppelt über ein einem Elektromotor nachgeschaltetes Getriebe.

Eine vergrößerte Scheibenbremse nach Art der Fig. 1 zeigen Fig. 2 und 3, wobei Fig. 2 das Zuspannen der Bremse und Fig. 3 das Lösen der Bremse darstellt. Beim Zuspannen wird der in Fig. 1 rechte Drehhebel 19, d.h. der von der Kolbenstange K des Bremszylinders betätigte Drehhebel 19, von der Kolbenstange an seinem oberen, der Kolbenstange zugewandten Ende im Bereich der Ausnehmung 31 für die Kolbenstange zur Bremsscheibe 3 hin gedrückt. Dabei drückt der untere Teil des exzentrisch gelagerten Drehhebels 19 das Druckstück 23 in Richtung der Bremsscheibe 3.

An seiner der Kolbenstange gegenüberliegenden Seite ist der Drehhebel 19 mit einer weiteren Ausnehmung 33 für das eine Ende der in der Ausnehmung 33 angeordneten und/oder angelenkten Kopplungsstange 31 versehen, welche ferner mit ihrem weiteren Ende gelenkig in eine entsprechende Ausnehmung 35 im zweiten Drehhebel 25 auf der gegenüberliegenden Seite der Bremsscheibe 3 eingreift. Beim Zuspannen wird der Drehhebel 25 somit synchron mit dem Drehhebel 19 bewegt, allerdings bewegt er sich an seinem oberen Ende mit der Ausnehmung 35 von der Bremsscheibe 3 weg, wenn sich der erste Drehhebel 19 auf die Bremsscheibe 3 zu bewegt. Durch eine geeignete Anordnung und Auslegung des Drehhebels (siehe die eingezeichneten Drehachsen) ist es aber möglich, dennoch sicherzustellen, daß bei der synchronen Bewegung der beiden Drehhebel 19, 25 beide Druckstücke 23, 29 und damit beide Bremsbeläge 5, 7 in Richtung der Bremsscheibe 3 und von dieser weg (Fig. 3) bewegt werden.

Die Drehhebel 19, 25 sind jeweils direkt oder über Abstützelemente (hier nicht dargestellt) an der Innenseite des Bremssattels 1 drehbar gelagert (z.B. mit zylindrischen Rollenlagern oder Gleitlagern; siehe den eingangs genannten Stand der Technik) oder mittels Kugelelementen (hier nicht dargestellt). Auf der den Druckstücken 23, 29 zugewandten Seite sind in dem Drehhebel in einer unteren Ausnehmung 36 weitere kugelartige Elemente 37 gleitgelagert angeordnet, welche über Zwischenstücke 39 die Kraftübertragung auf die Nachstellhülsen 27 und die Druckstücke 31 und somit auf die Bremsbeläge 5, 7 sichern.

Zur Montage der Elemente der Nachstelleinrichtung dienen hier vorteilhaft zwei Bleche 41, 43, welche u.a. von den Druckstücken 23, 29 durchsetzt sind, wobei eines der Bleche in einer Ausnehmung des Bremssattels verschraubbar ist (hier nicht dargestellt).

### Bezugszeichen

- Bremssattel: 1
- Bremsscheibe: 3
- Bremsbeläge: 5, 7
- Bremsbelagträger: 5a, 7a
- Belagmaterial: 5b, 7b
- Bolzen: 9
- Achsflansch: 11
- Zuspanneinrichtungen: 13, 15
- Öffnung: 17
- Drehhebel: 19
- Nachstellhülse: 21
- Druckstück: 23
- Drehhebel: 25
- Nachstellhülse: 27
- Druckstück: 29
- Kopplungsstange: 31
- Ausnehmung: 30,33,35
- kugelartige Elemente: 37
- Zwischenstücke: 39
- Bleche: 41,43
- Kolbenstange: K
- Achse: M
- Drehachse: D
- Bremszylinder: B

## Patentansprüche

1. Pneumatisch und/oder elektromechanisch betätigte Scheibenbremse für Nutzfahrzeuge, mit
a) einem eine Bremsscheibe (3) übergreifenden Bremssattel (1),
b) einer im Bremssattel angeordneten Zuspanneinrichtung (13) zum Zuspannen von Bremsbelägen (5, 7) beidseits der Bremsscheibe (3) in Richtung derselben;
c) sowie wenigstens einem im Bremssattel angeordneten Nachstellsystem zum Ausgleich von Bremsbelag- und/oder Scheibenverschleiß durch Verstellen des Abstandes zwischen Bremsbelag (7) und Bremsscheibe (3),
d) wobei das Nachstellsystem wenigstens eine Nachstelleinrichtung aufweist, insbesondere eine Nachsteller-Dreheinrichtung,
**dadurch gekennzeichnet, daß**
e) der Bremssattel (129)relativ zum Achsflansch unverschiebbar als Festsattel ausgelegt ist ,
f) beidseits der Bremsscheibe (3) jeweils eine der Zuspanneinrichtungen (13, 17) zum Zuspannen der Bremsbeläge (5, 7) angeordnet ist, wobei jede der beiden Zuspanneinrichtungen (13, 17) beidseits der Bremsscheibe (3) jeweils einen exzentrisch gelagerten Drehhebel (19, 25) aufweist, und
g) die Zuspanneinrichtungen (13, 17) auf den beiden Seiten der Bremsscheibe (3) über eine Kopplungseinrichtung derart miteinander gekoppelt sind, daß sie ausschließlich synchron bewegbar sind, wobei die Kopplungseinrichtung eine Kopplungsstange (31) aufweist, welche die beiden Drehhebel (19, 25) miteinander koppelt.

2. Scheibenbremse nach Anspruch 1, **dadurch gekennzeichnet, daß** jeweils wenigstens eine der Nachstelleinrichtungen auf jeder Seite der Bremsscheibe (3) zum Verstellen der axialen Abstände zwischen den beiden Bremsbelägen (5, 7) und der Bremsscheibe (3) vorgesehen ist.

3. Scheibenbremse nach einem der vorstehenden Ansprüche, **dadurch gekennzeichnet, daß** die Nachstelleinrichtungen miteinander verschraubte Nachstellhülsen (21, 27) und Druckstücke (23, 29) aufweisen.

4. Scheibenbremse nach einem der vorstehenden Ansprüche, **dadurch gekennzeichnet, daß** die Nachstelleinrichtungen separate Nachstellerantriebe beidseits der Bremsscheibe (3) aufweisen.

5. Scheibenbremse nach einem der vorstehenden Ansprüche, **dadurch gekennzeichnet, daß** der Bremssattel mit einem oder mehreren Bolzen (9) direkt am Achsflansch (11) oder an einen Zwischenflansch befestigt ist.

6. Scheibenbremse nach einem der vorstehenden Ansprüche, **dadurch gekennzeichnet, daß** die Kopplungsstange (31) in Ausnehmungen (33, 35) an den von den Druckstücken (23, 29) abgewandten Enden der Drehhebel (19, 25) eingreift.

7. Scheibenbremse nach einem der vorstehenden Ansprüche 3 bis 6, **dadurch gekennzeichnet, daß** die Drehhebel (19, 25) direkt oder über Zwischenelemente auf die Druckstücke (23, 29) einwirken.

8. Scheibenbremse nach einem der vorstehenden Ansprüche, **dadurch gekennzeichnet, daß** die Exzentrizität des Drehhebels (25) der zweiten Zuspanneinrichtung (15) entgegengesetzt zur Exzentrizität des Drehhebels (19) der ersten Zuspanneinheit (13) ausgebildet ist.

## Claims

1. Pneumatically and/or electro-mechanically actuated disc brake for commercial vehicles, with
a) a brake caliper (1) which engages over a brake disc (3),
b) a compressing device (13) arranged in the brake caliper to press brake linings (5, 7) on both sides of the brake disc (3) in the direction thereof,
c) and at least one adjustment system arranged in the brake caliper for compensating wear of the brake lining and/or the disc by adjusting the distance between the brake lining (7) and the brake disc (3),
d) such that the adjustment system comprises at least one adjustment device, in particular a pivoted adjustor device,
**characterised in that**
e) the brake caliper (129) is designed as a fixed caliper immobile relative to the axle flange,
f) on either side of the brake disc (3) is arranged in each case one of the compressing devices (13, 17) for pressing the brake linings (5, 7), and each of the two compressing devices (13, 17) on either side of the brake disc (3) comprises an eccentrically mounted pivoted lever (19, 25), and
g) the compressing devices (13, 17) at the two sides of the brake disc (3) are coupled to one another by means of a coupling device in such manner that they can be moved exclusively in synchronisation, the coupling device comprising a tie-rod (31) which couples the two pivoted levers (19, 25) to one another.

2. Disc brake according to Claim 1, **characterised in that** at least one of the respective adjustment devices on either side of the brake disc (3) is provided in order to adjust the axial distances between the two brake linings (5, 7) and the brake disc (3).

3. Disc brake according to any of the preceding claims, **characterised in that** the adjustment devices comprise adjustment sleeves (21, 27) and pressure elements (23, 29) screwed to one another.

4. Disc brake according to any of the preceding claims, **characterised in that** the adjustment devices have separate adjustor drives on the two sides of the brake disc (3).

5. Disc brake according to any of the preceding claims, **characterised in that** the brake caliper is attached by one or more bolts (9) directly on the axle flange (11) or on an intermediate flange.

6. Disc brake according to any of the preceding claims, **characterised in that** the tie-rod (31) engages in recesses (33, 35) on the ends of the pivoted levers (19, 25) remote from the pressure elements (23, 29).

7. Disc brake according to any of the preceding Claims 3 to 6, **characterised in that** the pivoted levers (19, 25) act upon the pressure elements (23, 29) directly or via intermediate elements.

8. Disc brake according to any of the preceding claims, **characterised in that** the eccentricity of the pivoted lever (25) of the second compressing device (15) is opposite to the eccentricity of the pivoted lever (19) of the first compressing device (13).

## Revendications

1. Frein à disque à commande pneumatique et/ou électromécanique pour véhicules utilitaire, comprenant
a) un étrier de frein (1) chevauchant un disque de frein (3),
b) une unité à serrer le frein (13), disposée dans ledit étrier de frein afin de serrer des garniture de frein (5, 7) des deux côtés dudit disque de frein le long de l'étendue du dernière,
c) ainsi qu'au moins un système de réglage disposé dans ledit étrier de frein pour la compensation de l'usure sur ladite garniture de frein et/ou dudit disque, par réglage de l'écart entre ladite garniture de frein (7) et ledit disque de frein (3),
d) audit système de réglage comprenant au moins un moyen de réajustage, en particulier un moyen réajusteur rotatif,
**caractérisé en ce**
e) que ledit étrier de frein (129) est conçu sous forme d'un étrier fixe de manière à être non déplaçable relativement au collet d'essieu,
f) qu'un desdites unités à serrer le frein (13, 17) respective est disposée des deux côtés dudit disque de frein (3) à serrer lesdites garnitures de frein (5, 7), à chaque desdites deux unités à serrer le frein (13, 17) des deux côtés dudit disque de frein (3) comprenant un levier rotatif (19, 25) respectif, qui est logé de façon excentrique, et
g) en ce que lesdites unités à serrer le frein (13, 17) des deux côtés dudit disque de frein (3) sont couplées l'une à l'autre moyennant un moyen coupleur d'une telle manière, qu'elles soient aptes à être en synchronisme exclusivement, audit moyen coupleur comprenant une tige de couplage (31) qui sert à coupler lesdits deux leviers rotatifs (19, 25) l'un avec l'autre.

2. Frein à disque selon la revendication 1, **caractérisé en ce qu'**au moins un desdits moyens de réajustage respectif de chaque côté dudit disque de frein (3) est disposé pour l'ajustage des écarts axiaux entre lesdites deux garnitures de frein (5, 7) et ledit disque de frein (39).

3. Frein à disque selon une quelconque des revendications précédentes, **caractérisé en ce que** lesdits moyens de réajustage comprennent des douilles de réajustage (21, 27) vissées l'une à l'autre et des éléments presseurs (23, 29).

4. Frein à disque selon une quelconque des revendications précédentes, **caractérisé en ce que** lesdits moyens de réajustage comprennent des mécanismes de réajustage séparés des deux côtés dudit disque de frein (3).

5. Frein à disque selon une quelconque des revendications précédentes, **caractérisé en ce que** ledit étrier de frein est fixé, moyennant un ou plusieurs boulons (9), directement audit collet d'essieu (11) ou à un collet intermédiaire.

6. Frein à disque selon une quelconque des revendications précédentes, **caractérisé en ce que** ladite tige de couplage (31) se trouve en prise dans des creux (33, 35) aux extrémités desdits leviers rotatifs (19, 25), qui sont opposés auxdits éléments presseurs (23, 29).

7. Frein à disque selon une quelconque des revendications précédentes 3 à 6, **caractérisé en ce que** lesdits leviers rotatifs (19, 25) agissent sur lesdits éléments presseurs (23, 29) directement ou via des éléments intermédiaires.

8. Frein à disque selon une quelconque des revendications précédentes, **caractérisé en ce que** l'excentricité dudit levier rotatif (25) de ladite deuxième unité à serrer le frein (15) est conçue de manière à être inverse à l'excentricité dudit levier rotatif (19) de ladite première unité à serrer le frein (13).
